Europäisches Patentamt

European Patent Office

Office européen des brevets

(19)

(11) **EP 1 218 703 B1**

(12) **EUROPÄISCHE PATENTSCHRIFT**

(45) Veröffentlichungstag und Bekanntmachung des Hinweises auf die Patenterteilung:
**08.12.2004 Patentblatt 2004/50**

(21) Anmeldenummer: **00978966.0**

(22) Anmeldetag: **02.10.2000**

(51) Int Cl.⁷: **G01H 3/00**, H04R 29/00

(86) Internationale Anmeldenummer:
**PCT/DE2000/003478**

(87) Internationale Veröffentlichungsnummer:
**WO 2001/025735 (12.04.2001 Gazette 2001/15)**

(54) **SCHALLDRUCK-KALIBRATOR**

ACOUSTIC PRESSURE CALIBRATOR

ETALONNEUR A PRESSION ACOUSTIQUE

(84) Benannte Vertragsstaaten:
**CH DE ES FR GB IT LI**

(30) Priorität: **05.10.1999 DE 19947683**

(43) Veröffentlichungstag der Anmeldung:
**03.07.2002 Patentblatt 2002/27**

(73) Patentinhaber: **EADS Deutschland GmbH**
**81663 München (DE)**

(72) Erfinder:
• **MÜLLER, Günther**
**D-83558 Maitenbeth (DE)**
• **STEIGENBERGER, Josef**
**83646 Bad Tölz (DE)**

(56) Entgegenhaltungen:
**DD-A- 211 463          US-A- 5 567 863**

• **PATENT ABSTRACTS OF JAPAN vol. 017, no. 351 (E-1392), 2. Juli 1993 (1993-07-02) & JP 05 049097 A (ONO SOKKI CO LTD), 26. Februar 1993 (1993-02-26)**
• **BARHAM R G: "The NPL laser pistonphone" JOURNAL OF LOW FREQUENCY NOISE & VIBRATION, 1993, UK, Bd. 12, Nr. 2, Seiten 36-38, XP000987375 ISSN: 0263-0923**

**Beschreibung**

Die Erfindung betrifft einen Schalldruck-Kalibrator gemäß dem Oberbegriff des Patentanspruchs 1.

Die Kalibrierung von Schalldruckmessgebern erfolgt im allgemeinen mit handelsüblichen Schalldruck-Kalibratoren, die einen maximalen Schalldruck von 94dB oder 124 dB erzeugen können. Für Messungen von Schalldruckpegeln ist es erforderlich die Kalibrierung mit nahezu ebenso hohen wie die zu messenden Pegeln durchzuführen, um die erforderliche Messgenauigkeit zu erreichen und um die erforderliche Dynamik des Aufzeichnungsgerätes der Messkette, z.B. eines Bandgerätes, zur optimalen Aussteuerung des Aufzeichnungsgerätes überprüfen zu können. Die in der Höhe begrenzten Schalldruckpegel der handelsüblichen Schalldruck-Kalibratoren können die vorgenannten Anforderungen nicht immer erfüllen.

Weiterhin ist es bei den bekannten Schalldruck-Kalibratoren erforderlich den Schalldruckmessgeber zur Kalibrierung aus seiner aufnehmenden Struktur auszubauen, damit er an die handelsüblichen Schalldruck-Kalibratoren adaptiert werden kann. Dieser erforderliche Ausbau ist bei längerwährenden Messversuchen mit häufigeren Kalibriervorgängen sehr zeitaufwendig und erfordert einen hohen Arbeitsaufwand. Durch das häufige Ein- und Ausbauen besteht die Gefahr, dass die empfindlichen Schalldruckmessgeber dabei beschädigt werden.

Ein Schalldruck-Kalibrator ist beispielsweise in US-5 567 863 gezeigt.

Aufgabe der Erfindung ist es einen Schalldruck-Kalibrator zu schaffen, der auch für zu messende Schalldrücke oberhalb von 124 dB geeignet und am eingebauten Schalldruckmessgeber adaptierbar ist.

Diese Aufgabe wird erfindungsgemäß durch die Merkmale des Patentanspruchs 1 gelöst. Weiterbildungen der Erfindung sind in den Unteransprüchen angegeben.

Die erfindungsgemäße Lösung basiert auf einem Hochdruckadapter an einem handelsüblichen Pistonphon, der den vom Pistonphon abgegebenen Schalldruck akustisch vorteilhaft auf Werte von > 150 dB verstärkt und die Kalibrierung des Schalldruckmeßgebers vor Ort im eingebauten Zustand ermöglicht.

Damit können Kalibrierungen unmittelbar vor Beginn des Messvorganges vor Ort an der gesamten Messkette ausgeführt werden und Messungen auch für hohe Schalldruckpegel mit relativ hoher Genauigkeit erfolgen. Weiterhin ermöglicht der Adapter vorteilhaft durch Anpassmodule die Möglichkeit unterschiedliche Typen von Schalldruckmessgebern zu kalibrieren.

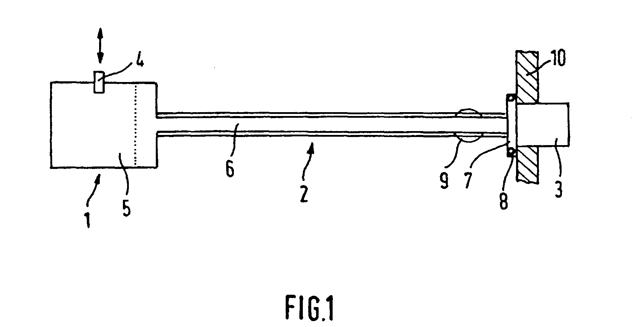

Anhand der Zeichnung wird nachstehend ein Ausführungsbeispiel der Erfindung näher erläutert. Die Fig. 1 zeigt die Prinzipskizze des erfindungsgemäßen Schalldruck-Kalibrators.

Der in der Fig. 1 gezeigte Schalldruck-Kalibrator besteht aus einem Pistonphon 1, einem an den Ausgang des Pistonphons angeschlossenen Hochdruckadapter 2 und einem Schalldruckmessgeber 3.

Das Pistonphon 2 weist einen Kolben 4 zur Schalldruckerzeugung auf und hat ein einstellbares Pistonphonvolumen 5. Der Hochdruckadapter 2 besteht aus einem $\lambda/4$-Resonators 6 mit einer aufgeweiteten Adapteröffnung 7 für die schalldichte Anbindung des Hochdruckadapters an den Schalldruckmessgeber 3 mittels eines Dichtringes 8. In den Hochdruckadapter 2 ist ein mechanisches Ausgleichsgelenk 9 integriert, das die schalldichte Anbindung zwischen dem Hochdruckadapter 2 und dem Schalldruckmessgeber 3 ggü. einer starren Ausführung des Hochdruckadapters 2 bei unvollkommener Ausrichtung der Komponenten zueinander vereinfacht. Der Schalldruckmessgeber 3 bleibt in seiner Struktur 10 auch während der Kalibration eingebaut. Das Pistonphonvolumen 5 ist für den statischen Druck über eine Resistanzbohrung belüftet. Der $\lambda/4$-Resonators 6 ist als Rohr mit konstantem Durchmesser ausgebildet.

Im Pistonphon 1 wird das einstellbare Pistonphonvolumen 5 durch den Kolben 4 mit der Frequenz f sinusförmig komprimiert und mit den dadurch erzeugten dynamischen Druckschwankungen das $\lambda/4$-Resonator-Rohr angeregt. Der als $\lambda/4$-Resonator ausgebildete Hochdruckadapter 2 verstärkt den im Pistonphonvolumen erzeugten Schalldruck und beaufschlagt über seine Adapteröffnung 7 den Schalldruckmessgeber 3 mit dem verstärkten Schalldruck.

Das einstellbare Pistonphonvolumen 5, sowie die Länge des $\lambda/4$-Resonators 6 können mittels mechanischer Mittel so aufeinander abgestimmt werden, dass sich der akustische Kopplungseffekt und damit die Verstärkung des $\lambda/4$-Resonators 6 auf ein Maximum einstellt. Die dabei ausgeführten Feinabstimmungen sind mittels mechanischer Mitteln verriegelbar. Die konstruktiven Mittel für die Durchführung der Abstimmungen und Verriegelungen stehen dem Fachmann ohne erfinderisch tätig werden zu müssen zur Verfügung, weshalb deren Ausbildung deshalb hier nicht näher beschrieben wird.

Für den Entwurf des erfindungsgemäßen Schalldruck-Kalibrator können die nachfolgend aufgelisteten physikalischen Zusammenhänge (G1) bis (G4) näherungsweise als Anhaltspunkte dienen:

$$p_i = \frac{\chi \cdot p_o \cdot s \cdot l}{2V} \qquad \text{(G1)}$$

$p_i$    dyn. Druck im Pistonphonvolumen
$\chi$    kappa Luft
$p_o$    statischer Luftdruck in der Umgebung
s    Kolbenfläche
l    Kolbenamplitude (Spitze-Spitze)
V    Pistonphonvolumen

$$P1 = \frac{p_i \cdot 2 \cdot \pi \cdot f_a \cdot \rho \cdot L_e}{4(1+0.4\frac{L}{2R})\sqrt{\rho \cdot \pi \cdot \nu \cdot f_a}} \qquad (G2)$$

P1     dyn. Druck am meßgeberseitigen Ausgang des λ/4-Resonators

$p_i$     dyn. Druck im Pistonhornvolumen

$f_a$     Anregungsfrequenz am Kolben

ρ     Dichte der Luft

L     Länge des Resonatorrohres

$L_e$     effektive Länge des λ/4-Resonators (etwa 0.58 L)

R     Radius des λ/4-Resonators

ν     dyn. Zähigkeit der Luft

$$P2 = P1 \frac{d^2}{D^2} \qquad (G3)$$

P2     dyn. Druck an der Membran des Schalldruckmessgebers

P1     dyn. Druck am meßgeberseitigen Ausgang des λ/4-Resonators

d     Durchmesser des λ/4-Resonators

D     Durchmesser der Adapteröffnung

Für eine gewählte Anregungsfrequenz von $f_A$ = 314 Hz kann mit den voranstehend genannten Gleichungen G1 bis G3 der Schalldruckpegel P2 an der Membran des Schalldruckmeßgebers abgeschätzt werden zu : 152,8 dB re. 2E-5 Pa. Die reale Rohrlänge muß wegen der zusätzlichen Federwirkung des Pistonphonvolumens, die parallel zu der Federwirkung des λ/4-Resonators auftritt, größer ausgelegt werden als die sich aus der Anregungsfrequenz $f_A$ theoretisch ergebende Rohrlänge L , damit Resonanz zwischen der Anregungsfrequenz $f_A$ und dem Schwingsystem auftritt. Die reale Rohrlänge L ergibt sich für den λ/4-Resonator aus der gewählten Frequenz f des Schwingsystemes und der Anpassung der Federkonstanten k2.

$$f = \frac{1}{2\pi}\sqrt{\frac{k1+k2}{M}} \qquad (G4)$$

f     Frequenz des Schwingsystemes bei Resonanz

k1     Federkonstante des Pistonhornvolumens

k2     Federkonstante des λ/4-Resonators

M     schwingende Masse des λ/4-Resonators

Die Kontrollmessung eines nach den Gleichungen G 1 bis G4 ausgelegten Schalldruck-Kalibrators ergab für die gewählte Anregungsfrequenz von $f_A$ = 314 Hz einenSchalldruckpegel von 151,3 dB. Dieser gemessene Wert ist geringer als der sich aus den Gleichungen G 1 bis G4 ergebende Wert von 152,8 dB , was auf unberücksichtigte Rand- und Reibungseinflüsse zurückzuführen ist. Die Gleichungen G 1 bis G4 geben jedoch die erreichbare Größenordnung für den Schalldruckpegel an dem erfindungsgemäßen Schalldruck-Kalibrator gut wieder.

Die Reproduzierbarkeit des erfindungsgemäßen Schalldruck-Kalibrators anhand von Messreihen, die sich über 24 Tage erstreckten, ergibt für die Abweichung vom Mittelwert des gemessenen Schalldruckpegels etwa +/- 0.3 dB. Die Abweichungen sind teilweise auf Luftdruck- und Temperaturänderungen zurückzuführen, die bei der Aufnahme der Messreihen nicht korrigiert worden sind.

Die voranstehend genannten Messergebnisse für die Pegelverstärkung und die Reproduzierbarkeit sind mit Piezogebern ermittelt. Werden Schalldruckmessgeber mit weicheren Meßmembranen kalibriert, werden die erzielbaren Pegelverstärkungen etwas geringer ausfallen.

Eine Einstellung des Schalldruck-Kalibrators sollte im Labor erfolgen, mittels einer geeichten Messkette, die dem zu kalibrierenden Schalldruckmessgeber entspricht und vergleichbare Einbaubedingungen aufweist.

**Patentansprüche**

**1.** Schalldruck-Kalibrator zur Kalibrierung eines Schalldruckmessgebers, mit einem Pistonphon (1) zur Erzeugung eines Schalldrucks, und einem Hochdruckadapter (2), der an einen Ausgang des Pistonphons (1) angeschlossen ist, **dadurch gekennzeichnet,** **dass** der Hochdruckadapter (2) als λ/4-Resonator ausgebildet ist,um den erzeugten Schalldruck zu verstärken, und eine aufgeweitete Adapteröffnung (7) mit einem Dichtring (8) zur schalldichten Anbindung an einen zu kalibrierenden Schalldruckmessgeber aufweist.

**2.** Schalldruck-Kalibrator nach Anspruch 1, **dadurch gekennzeichnet, dass** der Resonator (6) als Rohr mit Rohrlänge L und mit konstantem Durchmesser d ausgebildet ist.

**3.** Schalldruck-Kalibrator nach einem der Ansprüche 1 oder 2, **dadurch gekennzeichnet, dass** zur Verbesserung der schalldichten Anbindung des Hochdruckadapters (2) an den Schalldruckmessgeber in den Hochdruckadapter (2) ein mechanisches Ausgleichsgelenk (9) integriert und der Dichtring (8) in die Adapteröffnung (7) eingesetzt ist.

**Claims**

**1.** Acoustic pressure calibrator for the calibration of an acoustic pressure meter with a piston phone (1) to produce an acoustic pressure and a high pressure adapter (2) connected to an output of the piston phone (1),

**characterised in that**

the high pressure adapter (2) is constructed as a $\lambda/4$-resonator in order to increase the acoustic pressure produced, and a widened adapter opening (7) with a sealing ring (8) for soundproof connection to an acoustic pressure meter requiring calibration.

2. Acoustic pressure calibrator according to claim 1, **characterised in that** the resonator (6) is constructed with a tube of length L and constant diameter d.

3. Acoustic pressure calibrator according to either of claims 1 or 2, **characterised in that** in order to improve the soundproof connection between the high pressure adapter (2) and the acoustic pressure meter a mechanical equilibrating joint (9) is incorporated and the sealing ring (8) is located in the adapter opening (7).

**Revendications**

1. Etalonneur de pression acoustique pour calibrer un transmetteur de pression acoustique muni d'un microphone à piston (1) pour produire une pression acoustique et dont une sortie du microphone (1) se branche sur adaptateur haute pression (2),

**caractérisé en ce que**

l'adaptateur haute pression (2) est un résonateur (4) pour amplifier la pression acoustique produite et une ouverture d'adaptation (7) élargie comporte un joint d'étanchéité (8) pour une liaison étanche au bruit avec le transmetteur de pression acoustique.

2. Etalonneur de pression acoustique selon la revendication 1,

**caractérisé en ce que**

le résonateur (6) présente la forme d'un tube d'une longueur de tube L et d'un diamètre constant d.

3. Etalonneur de pression acoustique selon l'une quelconque des revendications 1 ou 2,

**caractérisé en ce que**

pour améliorer la liaison insonorisée de l'adaptateur haute pression (2) avec le transmetteur de mesure de pression acoustique, une articulation de compensation (9) mécanique est intégrée dans l'adaptateur haute pression (2) et le joint d'étanchéité (8) est inséré dans l'ouverture d'adaptateur (7).

FIG.1